(19) **Europäisches Patentamt**
**European Patent Office**
**Office européen des brevets**

(11) **EP 3 710 532 B1**

(12) **EUROPEAN PATENT SPECIFICATION**

(45) Date of publication and mention
of the grant of the patent:
**24.05.2023 Bulletin 2023/21**

(21) Application number: **18796931.6**

(22) Date of filing: **05.11.2018**

(51) International Patent Classification (IPC):
**C08J 5/00** *(2006.01)*

(52) Cooperative Patent Classification (CPC):
(C-Sets available)
**C08L 23/12; C08J 5/18;** C08J 2323/12;
C08J 2423/08; C08J 2423/12; C08J 2423/16;
C08L 2201/10; C08L 2203/16; C08L 2205/035;
C08L 2207/02; C08L 2207/062; C08L 2207/20

(Cont.)

(86) International application number:
**PCT/EP2018/080093**

(87) International publication number:
**WO 2019/091887 (16.05.2019 Gazette 2019/20)**

(54) **COMPOSITIONS OBTAINED FROM RECYCLED POLYOLEFINS**

AUS RECYCELTEN POLYOLEFINEN ERHALTENE ZUSAMMENSETZUNGEN

COMPOSITIONS OBTENUES À PARTIR DE POLYOLÉFINES RECYCLÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.11.2017 EP 17201378**

(43) Date of publication of application:
**23.09.2020 Bulletin 2020/39**

(73) Proprietor: **Basell Poliolefine Italia S.r.l.**
**20121 Milano (IT)**

(72) Inventors:
• **DE PALO, Roberto**
**44122 Ferrara (IT)**
• **CAVALIERI, Claudio**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 0 699 711      EP-A1- 2 062 937
EP-A1- 2 308 923      EP-A1- 2 781 548
EP-A1- 3 165 473      EP-B1- 0 807 145
GB-A- 2 097 408**

(52) Cooperative Patent Classification (CPC): (Cont.)

C-Sets
**C08L 23/12, C08L 23/0815, C08L 23/12,
C08L 23/16**

**Description**

FIELD OF THE INVENTION

The present disclosure relates to compositions obtained from recycled polyolefins containing a composition comprising a propylene ethylene copolymer as compatibilizer.

BACKGROUND OF THE INVENTION

Polyolefins, in particular polyethylene and polypropylene, are increasingly consumed in large amounts for many applications, including packaging for food and other goods, fibers, automotive components, and a great variety of manufactured articles. However, the said massive use of polyolefins is creating a concern as regards the environmental impact of the waste materials generated after the first use.

In fact, large amounts of waste plastic materials are presently coming from differential recovery of municipal plastic wastes, mainly constituted of flexible packaging (cast film, blown film and BOPP film), rigid packaging, blow moulded bottles and injection moulded containers. Through a step of separation from other polymers, such as PVC, PET or PS, two main polyolefinic fractions are obtained, namely polyethylene's (in particular LDPE, LADE) and polypropylenes (homopolymers, random copolymers, heterophasic copolymers).

One of the key problems in polyolefin recycling, especially when dealing with material streams from postconsumer waste (PCW) is the difficulty to quantitatively separate polypropylene (PP) and polyethylene (PE). Commercial recyclates from PCW sources have been found generally to contain mixtures of PP and PE, the minor component reaching up to < 50 wt%.

Such recycled PP/PE-blends normally suffer from deteriorated mechanical and optical properties, have poor performance in odour and taste and they generally suffer from poor compatibility between the main polymer phases, resulting in both limited impact strength and heat deflection resistance. Such inferior performance is partly caused by PE with its lower stiffness and melting point forming the continuous phase even at PP concentrations up to 65% because of the normally higher viscosity of the PE components in PCW.

These drawbacks normally excludes the application for high quality parts, and it only allows the use in low-cost and non-demanding applications.

Some research has been done to improve the compatibility between PP and PE. According to Wei Zhu et al.; Journal of Applied Polymer Science, Vol. 58, p. 515-521 (1995) the addition of ethylene - propylene copolymer as compatibilizer to blends of polypropylene and polyethylene can remedy the situation of high incompatibility to some extent and that ethylene-propylene rubber (EPR) or ethylene-propylene-diene rubber (EPDM) can substantially improve the toughness of the blends, but at the expense of deteriorated moduli and tensile strength.

WO2013075241 A1 also discloses a method of using ethylene-propylene-diene rubber (EPDM) or a random ethylene-propylene copolymer (EP-RACO) as compatibilizer for the recycling plastic blends.

It has now been found that a composition comprising propylene-base polymers and linear low-density polyethylene (LLDPE) can be used as compatibilizer for this mixture allowing better properties especially for the production of films.

SUMMARY OF THE INVENTION

The present disclosure relates to polyolefin compositions comprising:

T1) 70-95wt%, a polyolefin component containing:

a1) from 30 wt% to 70 wt% of a propylene based polymer having a propylene content higher than 60 wt%;

a2) from 30 wt% to 70 wt% of an ethylene based polymer having an ethylene content higher than 70;

the sum of a1) and a2), being referred to the total weight of a1) and a2), being 100;

T2) 5-30 wt% of an heterophasic propylene ethylene copolymer having:

i) a content of ethylene derived units ranging from 6.0 wt% to 16.0 wt%;

ii) a fraction soluble in xylene at 25°C (XS) ranging from 15 wt% to 45 wt%;

iii) the intrinsic viscosity ($\eta$) of the fraction soluble in xylene at 25°C ranging from 4.0 to 9.0 dl/g;

iv) the melt flow rate, measured according to ISO 1133 at 230 °C with a load of 2.16 kg, ranging from 0.3 to 50.0 g/10 min;

the sum of the amount of T1) + T2), being referred to the total weight of T1) and T2), being 100;

DETAILED DESCRIPTION OF THE INVENTION

The present disclosure relates to polyolefin compositions comprising:

T1) 70-95 wt%, preferably 75-90wt%; more preferably from 77 wt% to 85 wt% of a polyolefin component containing:

a1) from 30 wt% to 70 wt% preferably from 40 wt % to 60 wt% more preferably from 45 wt% to 55 wt% of a propylene based polymer having a propylene content higher than 60 wt%: preferably higher than 70 wt%; more preferably higher than 80 wt% even more preferably higher than 90 wt%

a2) from 30 wt% to 70 wt% preferably from 40 wt % to 60 wt% more preferably from 45 wt% to 55 wt% of an ethylene based polymer having an ethylene content higher than 70 preferably higher than 75 wt%; more preferably higher than 80 wt% even more preferably higher than 90 wt%;

the sum of a1) and a2), being referred to the total weight of a1) and a2), being 100;

T2) 5-30 wt% preferably 10-25wt%; more preferably from 15 wt% to 23 wt% of an heterophasic propylene ethylene copolymer having:

i) a content of ethylene derived units ranging from 6.0 wt% to 16.0 wt% preferably from 8.0 wt% to 14.0 wt%; more preferably from 9.0 wt% to 12.0 wt%;

ii) a fraction soluble in xylene at 25°C (XS) ranging from 15 wt% to 45 wt%; preferably from 20 wt% to 40 wt% : more preferably from 30 wt% to 35 wt%;

iii)the intrinsic viscosity ($\eta$) of the fraction soluble in xylene at 25°C ranging from 4.0 to 9.0 dl/g; preferably from 5.0 to 8.3 dl/g; more preferably from 5.6 to 7.9 dl/g;

iv)the melt flow rate, measured according to ISO 1133 at 230 °C with a load of 2.16 kg, ranging from 0.3 to 50.0 g/10 min; preferably from 0.4 to 20.0 g/10 min; more preferably from 0.5 to 4.0 g/10 min.

the sum of the amount of T1) and T2), being referred to the total weight of T1) and T2), being 100.

The heterophasic propylene ethylene copolymer is a polymer comprising a matrix comprising an isotactic propylene homopolymer and a rubber phase dispersed in the matrix being a propylene ethylene copolymer.

The polyolefin composition can be advantageously used for the production of films, including cast, blown and bioriented films mono or multilayer with a reduction of gels number in the films.

Component T1) is preferably a mixture of recycled polypropylene blend and recycled polyethylene blend.

More preferably component a1) is propylene homopolymer containing from 0 to 5 wt% of comonomers being olefin derived units preferably alpha olefins derived units having from 2 to 10 carbon atoms such as ethylene, 1-butene, 1-hexene and 1-octene derived units; ethylene being preferred, more preferably propylene homopolymer is used.

More preferably component a2) is an ethylene homo or copolymer containing from 0 to 20 wt% of comonomers being olefin derived units, preferably alpha olefins derived units having from 3 to 10 carbon atoms such as propylene, 1-butene, 1-hexene and 1-octene derived units; 1-butene and 1-hexene being preferred.

The component T2) is a commercial propylene ethylene copolymer such as for example grade Hifax X1956A sold by LyondellBasell.

The following examples are given in order to illustrate, but not limit the present disclosure.

**EXAMPLES**

**CHARACTERIZATIONS**

**Xylene-soluble (XS) Fraction at 25 °C**

Solubility in xylene: Determined as follows:

2.5 g of polymer and 250 ml of xylene are introduced in a glass flask equipped with a refrigerator and a magnetic stirrer. The temperature is raised in 30 minutes up to the boiling point of the solvent. The resulting clear solution is then kept under reflux and stirred for 30 minutes. The closed flask is then kept for 30 minutes in a bath of ice and water, then in a thermostatic water bath at 25 °C for 30 minutes. The resulting solid is filtered on quick filtering paper. 100 ml of the filtered liquid is poured in a previously weighed aluminum container, which is heated on a heating plate under nitrogen flow to remove the solvent by evaporation. The container is then kept on an oven at 80 °C under vacuum until a constant weight is obtained. The weight percentage of polymer soluble in xylene at room temperature is then calculated.
The content of the xylene-soluble fraction is expressed as a percentage of the original 2.5 grams and then, by the difference (complementary to 100%), the xylene insoluble percentage (%).

**Melt Flow Rate (MFR)**

Measured according to ISO 1133 at 230 °C with a load of 2.16 kg.

**Intrinsic Viscosity (IV)**

The sample is dissolved in tetrahydronaphthalene at 135 °C and then poured into a capillary viscometer. The viscometer tube (Ubbelohde type) is surrounded by a cylindrical glass jacket; this setup allows for temperature control with a circulating thermostatic liquid. The downward passage of the meniscus is timed by a photoelectric device.
The passage of the meniscus in front of the upper lamp starts the counter which has a quartz crystal oscillator. The meniscus stops the counter as it passes the lower lamp and the efflux time is registered: this is converted into a value of intrinsic viscosity through Huggins' equation (Huggins, M.L., J. Am. Chem. Soc., 1942, 64, 2716) provided that the flow time of the pure solvent is known at the same experimental conditions (same viscometer and same temperature). One single polymer solution is used to determine [ $\eta$ ].

**Ethylene content in the copolymers**

$^{13}$C NMR spectra were acquired on a Bruker AV-600 spectrometer equipped with cryoprobe, operating at 160.91 MHz in Fourier transform mode at 120 °C.
The peak of the $S_{\beta\beta}$ carbon (nomenclature according to "Monomer Sequence Distribution in Ethylene-Propylene Rubber Measured by $^{13}$C NMR. 3. Use of Reaction Probability Mode, " C. J. Carman, R. A. Harrington and C. E. Wilkes, *Macromolecules 10,* 536 (1977)) was used as an internal reference at 29.9 ppm. The samples were dissolved in 1,1,2,2-tetrachloroethane-*d2* at 120 °C with an 8% wt/v concentration. Each spectrum was acquired with a 90° pulse, 15 seconds of delay between pulses and composite pulse decoupling (CPD) to remove any $^1$H-$^{13}$C coupling. 512 transients were stored in 32K data points using a spectral window of 9000 Hz.
The assignments of the spectra, the evaluation of the triad distribution and the composition were made according to Kakugo ("Carbon-13 NMR Determination of Monomer Sequence Distribution in Ethylene-Propylene Copolymers Prepared with δ-Titanium Trichloride-Diethylaluminum Chloride," M. Kakugo, Y. Naito, K. Mizunuma and T. Miyatake, Macromolecules 15, 1150(1982)) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE = 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was determined using the following equation:
E% mol = 100 * [PEP+PEE+EEE]. Additionally, the weight percentage of ethylene content was determined using the following equation:

$$E\% \text{ wt.} = \frac{100 * E\% \text{ mol} * MW_E}{E\% \text{ mol} * MW_{E} + P\% \text{ mol} * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules 10, 536 (1977)) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of propylene sequences was calculated as mm content from the ratio of the PPP $mmT_{\beta\beta}$ (28.90-29.65 ppm) and the whole $T_{\beta\beta}$ (29.80-28.37 ppm)

**Production of T1 component**

In order to simulate the waste recycled polyolefin composition a blend of 50 wt% of hostalen GF 9055 F a commercial high density polyethylene sold by LyondellBasell and 50
wt% of Moplen HP561R a polypropylene homopolymer sold by LyondellBasell has been obtained.

T1 component has been blended with various propylene based copolymers and a cast film has bene obtained with the resulting composition the compositions and the gel number of the film are reported in table 1

Table 1

| Ex | | Comp 1 | Ex 2 | Comp 3 |
|---|---|---|---|---|
| T1 | Wt% | 100 | 80 | 80 |
| T2 | | | | |
| Hifax x1956A | Wt% | 0 | 20 | |
| Adflex X500F | Wt% | 0 | | 20 |
| Gel number <200 mu | 1/m$^2$ | 728 | 77 | 851 |

Adflex X500F is an heterophasic composition sold by LyondellBasell typically used in co-extruded cast film and injection moulding applications. Adflex X500F has an ethylene content of about 57 wt%; a fraction soluble in xylene at 25°C of 25 wt%. The intrinsic viscosity of the fraction soluble in xylene at 25°C is 1.34 dl/g and the MFR is about 7 g/10 min.

Hifax X 1956 A is a heterophasic TPO (thermoplastic polyolefin) polypropylene grade sold by LyondellBasell. Hifax X 1956 has an ethylene content of 11.0 wt%; a fraction soluble in xylene at 25°C of 29 wt%. The intrinsic viscosity of the fraction soluble in xylene at 25°C is 6.8 dl/g and the MFR is 1.7 g/10 min.

The gels count test has been carried out on a cast film Collin Extrusion line diameter with a 25 mm single screw with the following features:

Single screw L/D 25
Temperature profile
Cylinders 200 (close to the hopper) -> 230°C (at the end of the extruder, before the inlet to the die)
Die 240°C
Die width 150 mm

Chill roll 30°C
Film speed 3.0 m/min
Film thickness 50 micron
Inspected area 1 m2
OCS FS5 gel count unit on a 4 cm wide stripe

The elongation at break of cast films of example 2 and comparative examples 1 and 3 have been measured in machine direction (MD) and transversal direction (TD) according ASTM D 882 in table 2. The fact that for example 2 the values of elongation at break in the two direction is comparable is an indicator that the blend has been compatibilized.

Table 2

|  | Elongation at break MD % | Elongation at break TD % |
|---|---|---|
| Comp ex 1 | 1110 | 7 |
| Ex 2 | 1160 | 1020 |
| Comp ex 3 | 1190 | 7 |

**Claims**

1.   A polyolefin composition comprising:

T1) 70-95 wt%, a polyolefin component containing:

a1) from 30 wt% to 70 wt% of a propylene based polymer having a propylene content higher than 60 wt%; and
a2) from 30 wt% to 70 wt% of an ethylene based polymer having an ethylene content higher than 70;

the sum of a1) and a2), being referred to the total weight of a1) and a2), being 100;
T2) 5-30 wt% of an heterophasic propylene ethylene copolymer having:

i) a content of ethylene derived units ranging from 6.0 wt% to 16.0 wt%;
ii) a fraction soluble in xylene at 25°C (XS) ranging from 15 wt% to 45 wt%;
iii) the intrinsic viscosity ($\eta$) of the fraction soluble in xylene at 25°C ranging from 4.0 to 9.0 dl/g;
iv) the melt flow rate, measured according to ISO 1133 at 230 °C with a load of 2.16 kg, ranging from 0.3 to 50.0 g/10 min

the sum of the amount of T1) and T2), being referred to the total weight of T1) and T2), being 100;

2.   The polyolefin compositions according to claim 1 wherein component T2 contains from 8.0 wt% to 14.0 wt% of ethylene derived units.

3.   The polyolefin compositions according to claims 1 or 2 wherein component T2 contains from 9.0 wt% to 12.0 wt% of ethylene derived units.

4.   The polyolefin compositions according to anyone of claims 1-3 wherein component T2 has a melt flow rate ranging from 0.4 to 20.0 g/10 min.

5.   The polyolefin compositions according to anyone of claims 1-4 wherein component T2 has a melt flow rate ranging from 0.5 to 4.0 g/10 min.

6.   The polyolefin compositions according to anyone of claims 1-5 wherein component T2 has the intrinsic viscosity ($\eta$) of the fraction soluble in xylene at 25°C ranging from 5.0 to 8.3 dl/g.

7.   The polyolefin compositions according to anyone of claims 1-6 wherein component T2 has the intrinsic viscosity ($\eta$) of the fraction soluble in xylene at 25°C ranging from 5.6 to 7.9 dl/g.

8.   The polyolefin compositions according to anyone of claims 1-7 wherein component T2 has the fraction soluble in xylene at 25°C (XS) ranging from 20 wt% to 40 wt%.

9. The polyolefin compositions according to anyone of claims 1-8 wherein the polyolefin composition has a melt flow rate (230°C/2.16 kg) comprised between 0.5 to 25 g/10 m;

10. The polyolefin compositions according to anyone of claims 1-9 wherein component a1) ranges from 45 wt% to 55 wt% and component a2) from 40 wt % to 60 wt.

11. The polyolefin compositions according to anyone of claims 1- 10 wherein component T1) is a mixture of recycled polypropylene and polyethylene blend.

12. The polyolefin compositions according to anyone of claims 1-11 wherein component a1) is propylene homopolymer containing from 0 to 5 wt% of comonomers being olefin derived units.

13. The polyolefin compositions according to anyone of claims 1-12 wherein a2) is an ethylene homo or copolymer containing from 0 to 20 wt% of comonomers being olefin derived units.

14. A film comprising the polyolefin compositions of claims 1-13.

15. The film according to claim 14 being a cast, blown or bioriented films, mono or multilayer.


**Patentansprüche**

1. Polyolefinzusammensetzung, umfassend:

   T1) 70 bis 95 Gew.% einer Polyolefinkomponente, enthaltend:

   a1) 30 Gew.% bis 70 Gew.% eines propylenbasierten Polymers mit einem Propylengehalt höher als 60 Gew.%; und
   a2) 30 Gew.% bis 70 Gew.% eines ethylenbasierten Polymers mit einem Ethylengehalt höher als 70;

   wobei die Summe aus a1) und a2), die als Gesamtgewicht von a1) und a2) bezeichnet wird, 100 beträgt;
   T2) 5 Gew.% bis 30 Gew.% eines heterophasigen Propylen-Ethylen-Copolymers mit

   i) einem Gehalt an von Ethylen abgeleiteten Einheiten im Bereich von 6,0 Gew.% bis 16,0 Gew.%;
   ii) einer in Xylol bei 25 °C lösliche Fraktion (XS) im Bereich von 15 Gew.% bis 45 Gew.%;
   iii) einer Grenzviskosität ($\eta$) der in Xylol bei 25 °C löslichen Fraktion im Bereich von 4,0 und 9,0 dl/g;
   iv) einer Schmelzflussrate, gemessen gemäß ISO 1133 bei 230 °C unter einer Last von 2,16 kg, im Bereich von 0,3 bis 50,0 g/10 min;

   wobei die Summe der Menge von T1) und T2), die als das Gesamtgewicht von T1) und T2) bezeichnet wird, 100 beträgt.

2. Polyolefinzusammensetzungen nach Anspruch 1, wobei Komponente T2 8,0 Gew.% bis 14,0 Gew.% von Ethylen abgeleitete Einheiten enthält.

3. Polyolefinzusammensetzungen nach Anspruch 1 oder 2, wobei Komponente T2 9,0 Gew.% bis 12,0 Gew.% von Ethylen abgeleitete Einheiten enthält.

4. Polyolefinzusammensetzungen nach einem der Ansprüche 1 bis 3, wobei Komponente T2 eine Schmelzflussrate im Bereich von 0,4 bis 20,0 g/10 min aufweist.

5. Polyolefinzusammensetzungen nach einem der Ansprüche 1 bis 4, wobei Komponente T2 eine Schmelzflussrate im Bereich von 0,5 bis 4,0 g/10 min aufweist.

6. Polyolefinzusammensetzungen nach einem der Ansprüche 1 bis 5, wobei Komponente T2 eine Grenzviskosität ($\eta$) der in Xylol bei 25 °C löslichen Fraktion im Bereich von 5,0 bis 8,3 dl/g hat.

7. Polyolefinzusammensetzungen nach einem der Ansprüche 1 bis 6, wobei Komponente T2 eine Grenzviskosität (η) der in Xylol bei 25 °C löslichen Fraktion im Bereich von 5,6 bis 7,9 dl/g hat.

8. Polyolefinzusammensetzungen nach einem der Ansprüche 1 bis 7, wobei Komponente T2 eine in Xylol bei 25 °C lösliche Fraktion (XS) im Bereich von 20 Gew.% bis 40 Gew.% aufweist.

9. Polyolefinzusammensetzungen nach einem der Ansprüche 1 bis 8, wobei die Polyolefinzusammensetzung eine Schmelzflussrate (230 °C/2,16 kg) zwischen 0,5 bis 25 g/10 min aufweist.

10. Polyolefinzusammensetzungen nach einem der Ansprüche 1 bis 9, wobei Komponente a1) im Bereich von 45 Gew.% bis 55 Gew.% und Komponente a2) im Bereich von 40 Gew.% bis 60 Gew.% liegt.

11. Polyolefinzusammensetzungen nach einem der Ansprüche 1 bis 10, wobei Komponente T1) eine Mischung aus recyceltem Gemisch aus Polypropylen und Polyethylen ist.

12. Polyolefinzusammensetzungen nach einem der Ansprüche 1 bis 11, wobei Komponente a1) Propylenhomopolymer ist, das 0 bis 5 Gew.% Comonomere enthält, die von Olefin abgeleitete Einheiten sind.

13. Polyolefinzusammensetzungen nach einem der Ansprüche 1 bis 12, wobei a2) ein Ethylenhomo- oder -copolymer ist, das 0 bis 20 Gew.% Comonomere enthält, die von Olefin abgeleitete Einheiten sind.

14. Film, umfassend die Polyolefinzusammensetzungen nach den Ansprüchen 1 bis 13.

15. Film nach Anspruch 1 bis 14, der einschichtiger oder mehrschichtiger Gieß-, Blas- oder biorientierter Film ist.


**Revendications**

1. Composition polyoléfinique comprenant :

   T1) 70-95 % en poids d'un constituant polyoléfinique contenant :

      a1) 30 % en poids à 70 % en poids d'un polymère à base de propylène présentant une teneur en propylène supérieure à 60 % en poids ; et
      a2) 30 % en poids à 70 % en poids d'un polymère à base d'éthylène présentant une teneur en éthylène supérieure à 70 ;

   la somme de a1) et a2), par rapport au poids total de a1) et a2), valant 100 ;
   T2) 5 à 30 % en poids d'un copolymère hétérophasique de propylène-éthylène présentant :

      i) une teneur en motifs dérivés de l'éthylène située dans la plage de 6,0 % en poids à 16,0 % en poids ;
      ii) une fraction soluble dans le xylène à 25 °C (XS) située dans la plage de 15 % en poids à 45 % en poids ;
      iii) la viscosité intrinsèque (η) de la fraction soluble dans le xylène à 25 °C étant située dans la plage de 4,0 à 9,0 dl/g ;
      iv) l'indice de fluidité à chaud, mesuré selon la norme ISO 1133 à 230 °C sous une charge de 2,16 kg, étant situé dans la plage de 0,3 à 50,0 g/10 min ;

   la somme des quantités de T1) et de T2), par rapport au poids total de T1) et T2), valant 100.

2. Compositions polyoléfiniques selon la revendication 1, le constituant T2 contenant 8,0 % en poids à 14,0 % en poids de motifs dérivés de l'éthylène.

3. Compositions polyoléfiniques selon la revendication 1 ou 2, le constituant T2 contenant 9,0 % en poids à 12,0 % en poids de motifs dérivés de l'éthylène.

4. Compositions polyoléfiniques selon l'une quelconque des revendications 1 à 3, le constituant T2 présentant un indice de fluidité à chaud situé dans la plage de 0,4 à 20,0 g/10 min.

**5.** Compositions polyoléfiniques selon l'une quelconque des revendications 1 à 4, le constituant T2 présentant un indice de fluidité à chaud situé dans la plage de 0,5 à 4,0 g/10 min.

**6.** Compositions polyoléfiniques selon l'une quelconque des revendications 1 à 5, le constituant T2 présentant la viscosité intrinsèque ($\eta$) de la fraction soluble dans le xylène à 25 °C située dans la plage de 5,0 à 8,3 dl/g.

**7.** Compositions polyoléfiniques selon l'une quelconque des revendications 1 à 6, le constituant T2 présentant la viscosité intrinsèque ($\eta$) de la fraction soluble dans le xylène à 25 °C située dans la plage de 5,6 à 7,9 dl/g.

**8.** Compositions polyoléfiniques selon l'une quelconque des revendications 1 à 7, le constituant T2 présentant la fraction soluble dans le xylène à 25 °C (XS) située dans la plage de 20 % en poids à 40 % en poids.

**9.** Compositions polyoléfiniques selon l'une quelconque des revendications 1 à 8, la composition polyoléfinique présentant un indice de fluidité à chaud (230 °C/2,16 kg) compris entre 0,5 et 25 g/10 min.

**10.** Compositions polyoléfiniques selon l'une quelconque des revendications 1 à 9, le constituant a1) étant situé dans la plage de 45 % en poids à 55 % en poids et le constituant a2) dans la plage de 40 % en poids à 60 % en poids.

**11.** Compositions polyoléfiniques selon l'une quelconque des revendications 1 à 10, le constituant T1) étant un mix de mélange recyclé de polypropylène et de polyéthylène.

**12.** Compositions polyoléfiniques selon l'une quelconque des revendications 1 à 11, le constituant a1) étant un homopolymère de propylène contenant 0 à 5 % en poids de comonomères qui sont des motifs dérivés d'oléfines.

**13.** Compositions polyoléfiniques selon l'une quelconque des revendications 1 à 12, a2) étant un homopolymère ou un copolymère d'éthylène contenant 0 à 20 % en poids de comonomères qui sont des motifs dérivés d'oléfines.

**14.** Film comprenant les compositions polyoléfiniques selon les revendications 1 à 13.

**15.** Film selon la revendication 14 qui est un film coulé, soufflé ou bi-orienté, monocouche ou multicouche.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013075241 A1

**Non-patent literature cited in the description**

- **WEI ZHU et al.** *Journal of Applied Polymer Science,* 1995, vol. 58, 515-521
- **HUGGINS, M.L.** *J. Am. Chem. Soc.,* 1942, vol. 64, 2716

- **M. KAKUGO ; Y. NAITO ; K. MIZUNUMA ; T. MIYATAKE.** Carbon-13 NMR Determination of Monomer Sequence Distribution in Ethylene-Propylene Copolymers Prepared with δ-Titanium Trichloride-Diethylaluminum Chloride. *Macromolecules,* 1982, vol. 15, 1150
- **C.J. CARMAN ; R.A. HARRINGTON ; C.E. WILKES.** *Macromolecules,* 1977, vol. 10, 536